(19) Europäisches Patentamt

European Patent Office

Office européen des brevets

(11) **EP 1 472 900 B1**

(12) **EUROPÄISCHE PATENTSCHRIFT**

(45) Veröffentlichungstag und Bekanntmachung des Hinweises auf die Patenterteilung:
**01.06.2005 Patentblatt 2005/22**

(21) Anmeldenummer: 03720121.7

(22) Anmeldetag: **04.02.2003**

(51) Int Cl.⁷: **H04Q 7/38**

(86) Internationale Anmeldenummer:
**PCT/DE2003/000313**

(87) Internationale Veröffentlichungsnummer:
**WO 2003/067901 (14.08.2003 Gazette 2003/33)**

(54) **VERFAHREN ZUR WEITERFÜHRUNG EINER KOMMUNIKATIONSVERBINDUNG UNTER EINBEZIEHUNG MEHRERER FUNK-KOMMUNIKATIONSSYSTEME**

METHOD FOR RE-ROUTING A COMMUNICATION LINK INCLUDING SEVERAL RADIO COMMUNICATION SYSTEMS

PROCEDE POUR REACHEMINER UNE LIAISON DE COMMUNICATION AU MOYEN DE PLUSIEURS SYSTEMES DE RADIOCOMMUNICATION

(84) Benannte Vertragsstaaten:
**AT BE BG CH CY CZ DE DK EE ES FI FR GB GR HU IE IT LI LU MC NL PT SE SI SK TR**

(30) Priorität: **05.02.2002 DE 10204624**

(43) Veröffentlichungstag der Anmeldung:
**03.11.2004 Patentblatt 2004/45**

(73) Patentinhaber: **Siemens Aktiengesellschaft 80333 München (DE)**

(72) Erfinder:
• **LUO, Jijun 81677 München (DE)**
• **DILLINGER, Markus 81737 München (DE)**

(56) Entgegenhaltungen:
WO-A-01/47290          WO-A-01/58197
DE-A- 19 957 642       US-A- 5 371 782
US-A- 5 463 674

## Beschreibung

Die vorliegende Erfindung betrifft ein Verfahren zur Weiterführung einer bestehenden Kommunikationsverbindung mit einem Teilnehmer-Endgerät, welches Einrichtungen zur Kommunikation mit mehreren Funk-Kommunikationssystemen aufweist.

Es können in Funk-Kommunikationssystemen immer wieder Situationen auftreten, in denen Kommunikationsverbindungen zu Teilnehmer-Endgeräten nicht aufgebaut werden können, bestehende Kommunikationsverbindungen sich deutlich verschlechtern oder gar unterbrochen werden.

Die GB 2 173 377 beschreibt ein Verfahren zum Aufbau einer Kommunikationsverbindung zu einem Mobiltelefon in einem zellularen Funk-Kommunikationssystem, bei dem eine Kommunikationsverbindung über eine benachbarte, überlappende Funkzelle des Funk-Kommunikationssystems aufgebaut wird, wenn in einer bestimmten Funkzelle alle Funkkanäle dieses Funk-Kommunikationssystems bereits belegt sind. Dieses Verfahren sieht also die Auswahl eines alternativen Kommunikationspfades innerhalb desselben Funk-Kommunikationssystems vor.

Ein solches Verfahren scheitert jedoch dann, wenn sich eine bestehende Kommunikationsverbindung innerhalb eines Funk-Kommunikationssystems stark verschlechtert oder unterbrochen wird, beispielsweise auf Grund von starken Störungen der Kommunikationsverbindungen wie Fading, hoher Mobilität der Teilnehmer-Endgeräte oder hoher Verkehrslast innerhalb des Funk-Kommunikationssystems, und innerhalb des Funk-Kommunikationssystems keine sinnvolle Alternative für die Weiterführung der Kommunikationsverbindung gegeben ist.

Das Dokument DE 199 57 642 A1 beschreibt ein Verfahren zur Weiterführung einer Kommunikationsverbindung über ein zweites Kommunikationssystem. Jedoch besteht eine Systemübergeordnete Vermittlungseinrichtung, welche systemübergreifende Adressdaten zentral verwaltet.

Aufgabe der vorliegenden Erfindung ist es, ein verbessertes Verfahren zur Weiterführung einer bestehenden Kommunikationsverbindung mit einem Teilnehmer-Endgerät bereitzustellen, das einen möglichst hohen Grad an Sicherheit für die Weiterführung der Kommunikationsverbindung garantiert.

Diese Aufgabe wird gelöst nach den Merkmalen des unabhängigen Patentanspruchs. Vorteilhafte Weiterbildungen der Erfindung sind den abhängigen Patentansprüchen entnehmbar.

Es wird hierbei auf Teilnehmer-Endgeräte Bezug genommen, welche Einrichtungen zur Kommunikation mit mehreren Funk-Kommunikationssystemen aufweisen. Gemäß der vorliegenden Erfindung wird in einer Umgebung mit mehreren Funk-Kommunikationssystemen nach einer Unterbrechung der bestehenden Kommunikationsverbindung zu einem ersten Funk-Kommunikationssystem eine Weiterführung (Rerouting) der Kommunikationsverbindung unter Einbeziehung mindestens eines weiteren Funk-Kommunikationssystems versucht. Es werden also im Rahmen der vorliegenden Erfindung auf vorteilhafte Weise die Möglichkeiten von Teilnehmer-Endgeräte genutzt, welche Einrichtungen zur Kommunikation mit mehreren Funk-Kommunikationssystemen aufweisen, also im einfachsten Fall sogenannte Dual-Mode-Endgeräte oder im allgemeinen Fall Multi-Mode-Endgeräte.

Wird eine bestehende Verbindung von und/oder zu einem solchen Endgerät innerhalb eines ersten Funk-Kommunikationssystems gestört oder unterbrochen, so kann durch Zugriff auf ein zweites oder auch auf weitere Funk-Kommunikationssysteme versucht werden, die Kommunikationsverbindung weiter zu führen. Es besteht dann eine größere Wahrscheinlichkeit, einen verbesserten Kommunikationspfad für die Weiterführung der Kommunikationsverbindung bereitstellen zu können, insbesondere dann, wenn die zur Verfügung stehenden Funk-Kommunikationssysteme deutliche funktionelle Unterschiede in der Versorgung der Teilnehmer-Endgeräte aufweisen wie z.B. Netzabdeckung, Sendeleistung, Übertragungskapazität, Verkehrskanäle etc. Die Weiterführung kann dann ganz oder auch nur teilweise über ein alternatives Funk-Kommunikationssystem erfolgen. So kann also die Kommunikationsverbindung z.B. direkt vom Teilnehmer-Endgerät zu dem Ziel der Kommunikationsverbindung über ein alternatives Funk-Kommunikationssystem weitergeführt werden, es kann aber auch die Kommunikationsverbindung lediglich vom Teilnehmer-Endgerät einem geeigneten Vermittlungsknoten des ursprünglichen Funk-Kommunikationssystems über ein alternatives Funk-Kommunikationssystem und von dort weiter in dem ursprünglichen Funk-Kommunikationssystem zu dem Ziel der Kommunikationsverbindung weitergeführt werden.

Es kann bevorzugt vorgesehen werden, dass nach einer Störung oder Unterbrechung der bestehenden Kommunikationsverbindung Anfragen zur Weiterführung der Kommunikationsverbindung parallel über ein erstes Funk-Kommunikationssystem und mindestens ein weiteres Funk-Kommunikationssystem erfolgen. Damit können auf effiziente Weise mehrere oder alle Alternativen für die Weiterführung gleichzeitig abgefragt werden, um als Basis für eine Entscheidung für die Weiterführung der Kommunikationsverbindung zu dienen, d.h. für eine Entscheidung, auf welche Weise und über welches Funk-Kommunikationssystem die Kommunikationsverbindung ganz oder teilweise weitergeführt wird.

Die Entscheidung, über welches der zur Verfügung stehenden Funk-Kommunikationssysteme eine Weiterführung der Kommunikationsverbindung erfolgt, kann alternativ oder kumulativ auf unterschiedliche geeignete Entscheidungsparameter gestützt werden. So kann insbesondere eine Entscheidung über die Weiterführung der Kommunikationsverbindung unter Einbeziehung mindestens eines.weiteren Funk-Kommunikationssystems gesteuert durch Zeitinformationen erfolgen, d.h. es können der Entscheidung definierte Zeitmarken oder Zeitdauern zu Grunde gelegt werden. Bevorzugt kann die Entscheidung über die Weiterführung der Kommunikationsverbindung abhängig von der Zeitdauer bis zu einer Antwort der Funk-Kommunikationssysteme auf die Anfragen erfolgen. Es können also Zeitdauern global oder individuell für jedes Funk-Kommunikationssystem vorgegeben werden. Liegt innerhalb dieser Zeitdauer keine positive Antwort des entsprechenden Funk-Kommunikationssystems auf eine Anfrage seitens des Teilnehmer-Endgerätes vor, so kann eine Entscheidung für eine Weiterführung der Kommunikationsverbindung über ein alternatives Funk-Kommunikationssystem getroffen werden.

Alternativ oder zusätzlich zu der vorgenannten Entscheidung auf Basis von Zeitinformationen kann die Entscheidung über die Weiterführung der Kommunikationsverbindung abhängig von einem Vergleich von Verbindungsparametern für die Kommunikationsverbindung erfolgen, wie beispielsweise abhängig von einem Vergleich der zu erwartenden Sendeleistungen oder der zu erwartenden Verkehrslasten für die als Alternativen zur Verfügung stehenden Funk-Kommunikationssysteme. Hierbei kann angestrebt werden, die für das jeweilige Funk-Kommunikationssystem entstehende zusätzliche Belastung möglichst zu minimieren.

Um eine besonders effektive Methode für die Weiterführung der Kommunikationsverbindung zu ermöglichen, kann vorgesehen werden, dass die Weiterführung der Kommunikationsverbindung unter Zugriff auf Adresstabellen erfolgt, die Adressdaten der Teilnehmer-Endgeräte in den verschiedenen Funk-Kommunikationssystemen zueinander in Relation setzen. Den Teilnehmer-Endgeräten werden also bereits vor einer möglichen Weiterführung einer Kommunikationsverbindung durch ein alternatives Funk-Kommunikationssystem innerhalb der alternativen Funk-Kommunikationssysteme entsprechende Adressdaten zugeteilt und es wird im Rahmen von Adresstabellen eine eindeutige gegenseitige Zuordnung dieser Adressdaten durchgeführt, um die Bereitstellung alternativer Verbindungspfade zu erleichtern.

Zur Erzeugung der Adresstabellen können regelmäßig und/oder ereignisgesteuert die Adressdaten der Teilnehmer-Endgeräte zwischen Adressspeichern der Funk-Kommunikationssysteme ausgetauscht werden. Solche Adressspeicher können beispielsweise in geeigneten Zentraleinrichtungen der Funk-Kommunikationssysteme wie in Vermittlungseinrichtungen bereitgehalten werden. Der ereignisgesteuerte Austausch kann z.B. bei erstmaliger Inbetriebnahme eines Teilnehmer-Endgerätes in einem der Funk-Kommunikationssysteme, bei einem Wechsel des Teilnehmer-Endgerätes zwischen Untereinheiten eines Funk-Kommunikationssystems oder nach einer Unterbrechung der Verbindung zwischen Teilnehmer-Endgerät und Funk-Kommunikationssystem oder einer Unterbrechung der Verbindung der Funk-Kommunikationssysteme untereinander erfolgen.

Eine besonders vorteilhafte Art der Adressierung der Teilnehmer-Endgeräte sieht vor, dass die Adressdaten der Teilnehmer-Endgeräte in zumindest einem der Funk-Kommunikationssysteme durch eine Kombination aus Adressdaten (z.B. eines Prefix) zur Identifizierung einer lokalen Untereinheit des Funk-Kommunikationssystems und weiteren Adressdaten zur Identifizierung des Teilnehmer-Endgerätes innerhalb der lokalen Untereinheit des Funk-Kommunikationssystems gebildet werden. Damit genügt es, innerhalb der lokalen Untereinheit des Funk-Kommunikationssystems lediglich eine Adressierung des Teilnehmer-Endgerätes über den Teil der Adressdaten vorzunehmen, der das Teilnehmer-Endgerät selbst identifiziert. Auf den Teil der Adressdaten, der die lokale Untereinheit identifiziert, kann innerhalb der lokalen Untereinheit verzichtet werden.

Wie bereits ausgeführt, kann vorgesehen werden, dass eine Weiterführung der Kommunikationsverbindung entweder ganz oder auch nur teilweise über ein alternatives Funk-Kommunikationssystem erfolgt, also dass die Weiterführung der Kommunikationsverbindung ausschließlich über Einrichtungen eines Funk-Kommunikationssystems erfolgt oder die Weiterführung der Kommunikationsverbindung über Einrichtungen mehrerer Funk-Kommunikationssysteme erfolgt.

Als alternative Funk-Kommunikationssysteme können grundsätzlich alle Arten solcher Funk-Kommunikationssysteme vorgesehen werden. In einer speziellen Ausführungsform der vorliegenden Erfindung werden als Kommunikationssysteme mindestens ein Adhoc-Funk-Kommunikationssystem und mindestens ein zellulares Funk-Kommunikationssystem verwendet.

Ein spezielles Ausführungsbeispiel der vorliegenden Erfindung wird nachfolgend anhand der Figuren 1 bis 9 erläutert.

Es zeigen:

FIG 1:  Darstellung eines Dual-Mode Teilnehmer-Endgeräts

FIG 2:  Schematische Darstellung einer Kommunikationsverbindung in einem Ad-Hoc Funk-Kommunikationssystem

FIG 3 und 4:  Weiterführung einer Kommunikationsverbindung über alternative Kommunikationspfade

FIG 5:  Darstellung einer verbesserten Adressierung der Teilnehmer-Endgeräte

FIG 6:    Signalisierungsablauf einer Übermittlung lokaler Adressdaten zwischen Teilnehmer-Endgerät, Kontrollinstanz eines Ad-Hoc-Systems und Vermittlungseinrichtung eines zellularen Systems

FIG 7:    Schematische Darstellung des Zusammenhangs zwischen den mindestens erforderlichen Sendeleistungen verschiedener Funk-Kommunikationssysteme

FIG 8:    Entscheidungsdiagramm für einen bestimmten Kommunikationspfad zur Weiterführung einer Kommunikationsverbindung

FIG 9:    Beispiel für einen Signalisierungsablauf für das Verfahren nach FIG 8

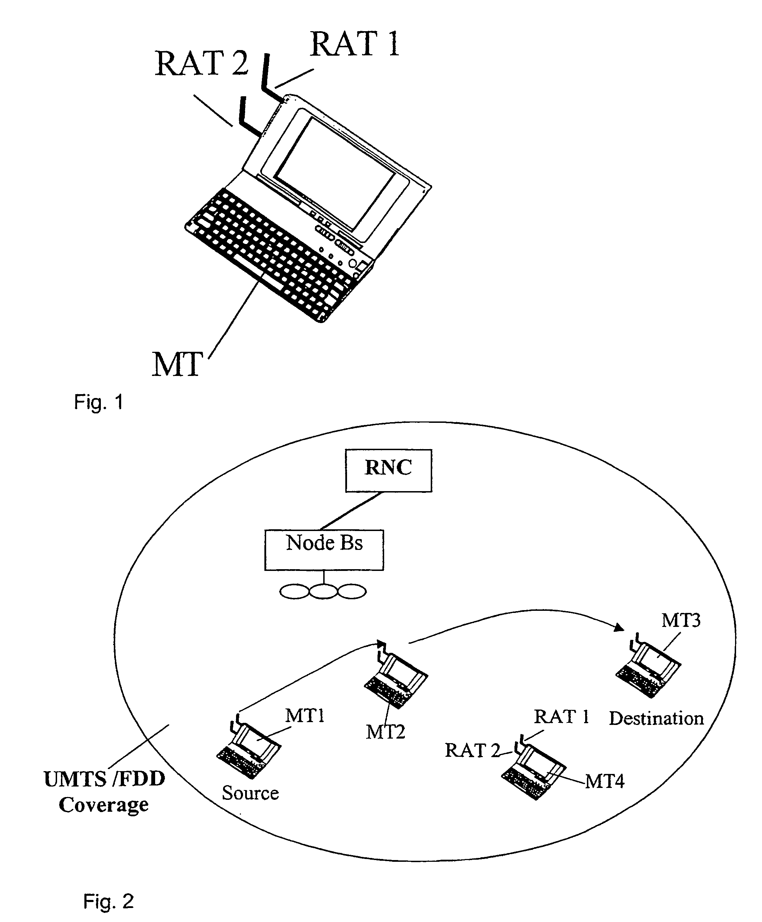

FIG 1 zeigt ein Dual-Mode Teilnehmer-Endgerät MT, das auf zwei Funk-Kommunikationssysteme mit unterschiedlicher Funk-Zugangstechnik zugreifen kann, beispielsweise auf ein Ad-Hoc Funk-Kommunikationssystem in Form eines so genannten drahtlosen lokalen Netzwerkes WLAN (Wireless Local Area Network) wie beispielsweise dem HIPERLAN/2- oder IEEE802.11-System und ein zellulares Funk-Kommunikationssystem, beispielsweise nach dem GSM-Standard oder nach dem UMTS-Standard wie z.B. ein UMTS/FDD-System. Das Teilnehmer-Endgerät MT weist hierfür eine erste Einrichtung RAT1 für den Zugang (Radio Access) zu dem Ad-Hoc Funk-Kommunikationssystem und eine zweite Einrichtung RAT2 für den Zugang zu dem zellularen Funk-Kommunikationssystem auf. Somit kann das Teilnehmer-Endgerät über zwei unterschiedliche Funkschnittstellen auf zwei unterschiedliche Funk-Kommunikationssysteme zugreifen.

FIG 2 zeigt ein Ad-Hoc Funk-Kommunikationssystem mit Teilnehmer-Endgeräten MT1 bis MT4, in dem eine bestehende Kommunikationsverbindung von einem Quellen-Endgerät MT1 (Source) über ein weiteres Teilnehmer-Endgerät MT2 des Ad-Hoc Funk-Kommunikationssystems zu einem Ziel-Endgerät MT3 (Destination) geführt wird. Gleichzeitig befinden sich alle Teilnehmer-Endgeräte MT1 bis MT4 im Bereich eines UMTS/FDD-Kommunikationssystems (UMTS/FDD Coverage), so dass grundsätzlich auch für die Teilnehmer-Endgeräte MT1 bis MT4 ein Zugang zu dem zellularen UMTS/FDD-Kommunikationssystem möglich ist.

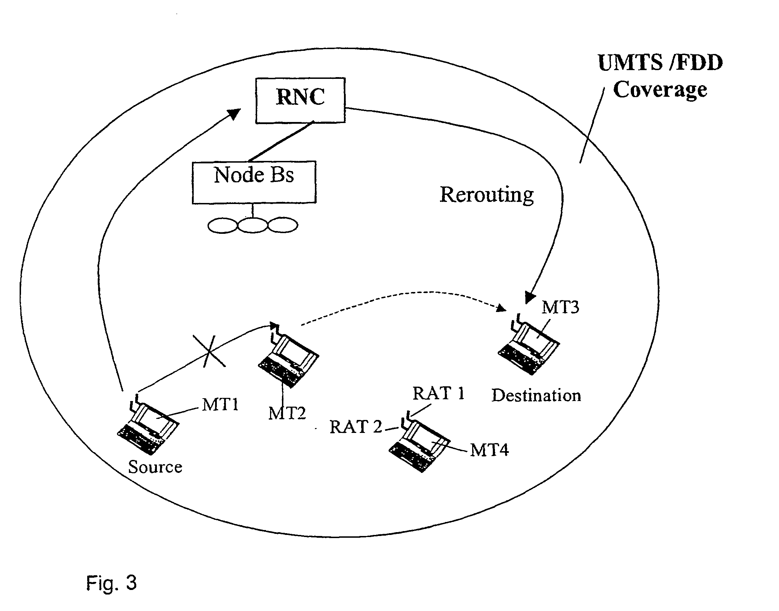

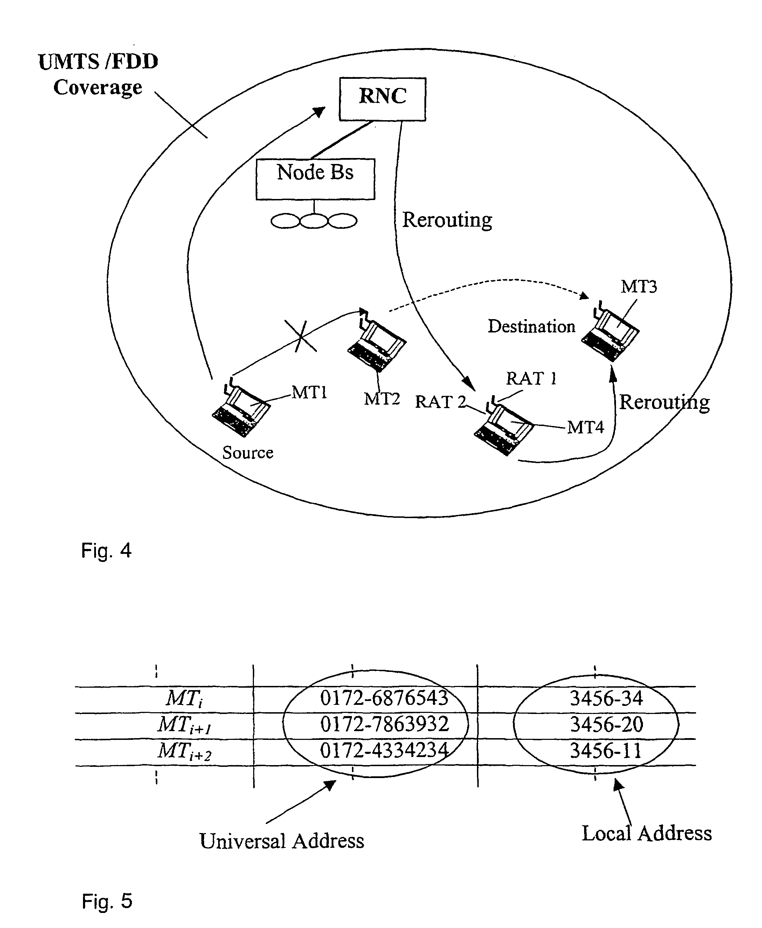

FIG 3 und 4 zeigen nun den Fall, dass die in FIG 2 dargestellte bestehende Ad-Hoc-Kommunikationsverbindung zwischen den Teilnehmer-Endgeräten MT1 (Source) und MT3 (Destination) auf der Strecke zwischen den Teilnehmer-Endgeräten MT1 und MT2 unterbrochen wird. Es besteht nun die Möglichkeit, die Verbindung auf einem alternativen Kommunikationspfad weiterzuführen (Rerouting), wobei dies gemäß der vorliegenden Erfindung auch unter Einbeziehung des UMTS/FDD-Systems erfolgen kann. Es muss jedoch nicht automatisch eine Weiterführung der Kommunikationsverbindung über das UMTS/FDD-Funk-Kommunikationssystem erfolgen, sondern diese Entscheidung kann von mehreren Parametern abhängig gemacht werden.

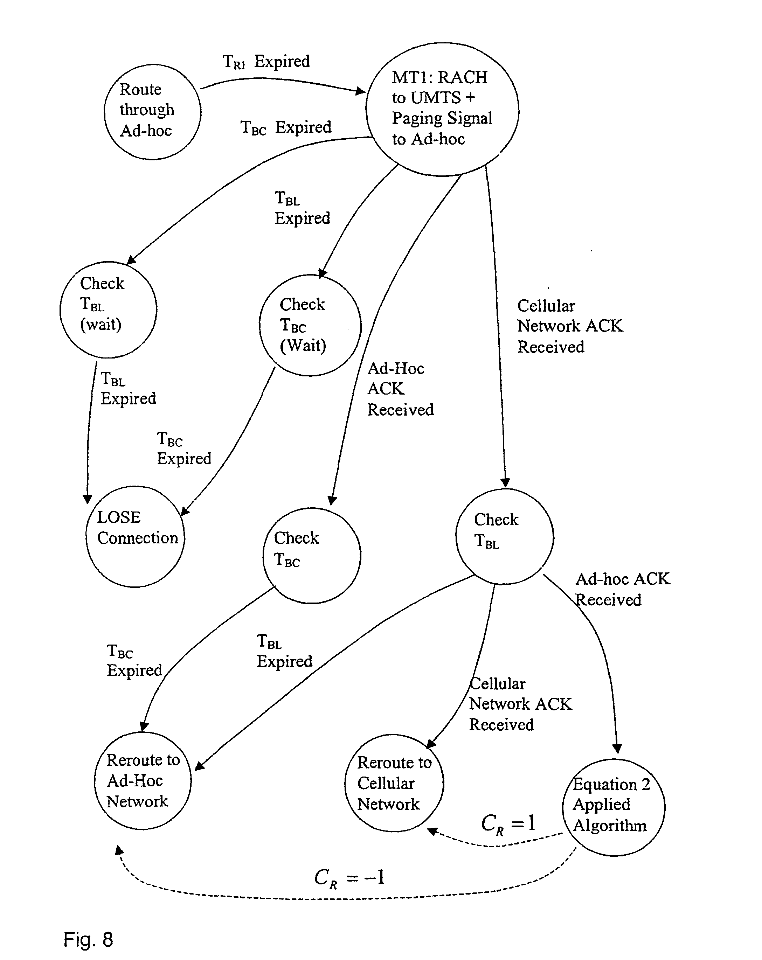

So kann zunächst einerseits eine Anfrage zum Aufbau einer Kommunikationsverbindung in Form von RACH-Daten (RACH-Burst) an das UMTS/FDD-System gesendet werden und parallel dazu eine analoge Anfrage in Form eines Paging-Signals innerhalb des Ad-Hoc Funk-Kommunikationssystems ausgesendet werden. Es kann dann je nachdem, ob, wann und in mit welchem Inhalt Antworten der entsprechenden Funk-Kommunikationssysteme eintreffen, entschieden werden, welcher neue Kommunikationspfad (Rerouting) für eine Weiterführung der Kommunikationsverbindung am günstigsten ist. Insbesondere kann vorgesehen werden, dass eine Kommunikationsverbindung über das UMTS/FDD-System aufgebaut wird, wenn die erwartete Antwort des Ad-Hoc Funk-Kommunikationssystems nicht oder nicht rechtzeitig empfangen wird. Liegen jedoch Antworten beider Funk-Kommunikationssysteme vor, so kann abgewogen werden, welcher Kommunikationspfad für das Gesamtsystem den größten Vorteil bietet. Dies wird nachfolgend anhand der FIG 8 detailliert erläutert.

Wie FIG 3 und FIG 4 zeigen, kann bei einer Weiterführung der Kommunikationsverbindung über einen alternativen Verbindungspfad unter Einbeziehung des UMTS/FDD-Systems entweder vorgesehen sein, dass die alternative Kommunikationsverbindung (Rerouting) ausschließlich innerhalb des UMTS/FDD-Systems weitergeführt wird (FIG 3), so dass wiederum nur Einrichtungen eines einzigen Funk-Kommunikationssystems beteiligt sind. Es kann aber auch vorgesehen sein, dass die alternative Kommunikationsverbindung (Rerouting) innerhalb des UMTS/FDD-Systems lediglich bis zu einem weiteren Teilnehmer-Endgerät MT4 des Ad-Hoc Funk-Kommunikationssystems geführt wird (FIG 4), welches ebenfalls mit Einrichtungen RAT1, RAT2 für einen Zugang sowohl zu dem Ad-Hoc Funk-Kommunikationssystem als auch zu dem zellularen UMTS/FDD-System ausgestattet ist und im Rahmen der Weiterführung der Kommunikationsverbindung folglich als Vermittlungsknoten wirkt. Von diesem Teilnehmer-Endgerät kann dann innerhalb des Ad-Hoc Funk-Kommunikationssystems die alternative Kommunikationsverbindung (Rerouting) zu dem Ziel-Teilnehmer-Endgerät MT3 (Destination) weitergeführt werden.

Wie bereits erwähnt, können verschiedene Parameter als Basis für eine Entscheidung und/oder für eine effektive Einrichtung eines alternativen Kommunikationspfades berücksichtigt werden. Solche Parameter sind bevorzugt Zeitinformationen über die Zeitdauer bis zu einer Antwort der Funk-Kommunikationssysteme auf eine Anfrage des Teilnehmer-Endgerätes MT1. Hierfür können über Timer definierte maximale Zeitdauern vorgesehen werden, wobei hier $T_{BL}$ die Zeitdauer für eine Antwort des Ad-Hoc Funk-Kommunikationssystems und $T_{BC}$ die Zeitdauer für eine Antwort des zellularen UMTS/FDD-Systems bezeichnen soll.

Sind mehrere alternative Kommunikationspfade möglich, so kann als Entscheidungsgrundlage für das eine oder andere Funk-Kommunikationssystem oder für einen von mehreren möglichen Kommunikationspfaden innerhalb eines Funk-Kommunikationssystems auch eine Kostenfunktion für die möglichen alternativen Kommunikationsverbindungen berücksichtigt werden, also Parameter, die darüber Aufschluss geben, welche der möglichen alternativen Kommunikationsverbindungen den geringsten Aufwand erfordern oder den größten Nutzen bringen.

Ein solcher Parameter ist der sogenannte Verbindungsgewinn (Link Gain), also das Inverse des Pfadverlustes entlang des Kommunikationspfades. Der Verbindungsgewinn hängt mit der erforderlichen Sendeleistung für diese Kommunikationsverbindung zusammen, denn je geringer der Pfadverlust, desto geringer ist die erforderliche Sendeleistung. Es soll durch Berücksichtigung dieses Parameters die durch die alternative Kommunikationsverbindung entstehenden zusätzlichen Interferenzen für das betreffende Funk-Kommunikationssystem möglichst minimiert werden. Analog kann auch als weiterer Parameter die durch alternative Kommunikationsverbindung entstehenden zusätzlichen Verkehrslast im Verhältnis zu der im jeweiligen Funk-Kommunikationssystem bereits vorhandenen Verkehrslast berücksichtigt werden. Die Entscheidung für eine Weiterführung der Kommunikationsverbindung über ein bestimmtes von mehreren möglichen Funk-Kommunikationssystemen kann auch auf Basis eines Parameters für die Qualität der alternativen Kommunikationsverbindung (Quality of Service QoS) erfolgen.

Im folgenden soll ein Beispiel für eine vorgenanntes Entscheidungs-Szenario dargestellt werden. Es sei $G_L$ der Verbindungsgewinn in dem Ad-Hoc-System und $G_C$ der Verbindungsgewinn in dem zellularen UMTS/FDD-System. Wie bereits ausgeführt ist die erforderliche Sendeleistung umso geringer, je geringer die Pfadverluste sind, also je höher der Verbindungsgewinn ist. Dies lässt sich durch folgende Gleichungen ausdrücken:

$$\begin{cases} P_{TxL} + G_L = P_{RxL} \\ P_{TxC} + G_C = P_{RxC} \end{cases} \tag{1}$$

wobei $P_{TxL}$ die mindestens erforderliche Sendeleistung und $P_{RxL}$ die mindestens erforderliche Empfangsleistung in dem Ad-Hoc-System darstellt und $P_{TxC}$ und $P_{RxC}$ die entsprechenden Parameter für das zellulare UMTS/FDD-System darstellen. Für den Entscheidungsprozess im Rahmen der Weiterführung einer Kommunikationsverbindung (Rerouting) können die Variablen der rechten Seite von Gleichung (1) durch die Empfangsleistungen ersetzt werden, die für die alternativen Kommunikationsverbindungen zu erwarten sind. Aus ihnen können mit Gleichung (1) auch die zu erwartenden, mindestens erforderlichen Sendeleistungen bestimmt werden.

Aufgrund der direkten Wechselwirkung zwischen Sendeleistung und den Anforderungen an die maximale Last in einem Funk-Kommunikationssystem kann ein Entscheidungs-Algorithmus für einen bestimmten Kommunikationspfad zur Weiterführung einer Kommunikationsverbindung in Form folgender Gleichung geschrieben werden:

$$C_R = \text{sign}[P_{TxL} + H_L - (P_{TxC} + H_C)] \tag{2}$$

wobei $H_L$ eine Rerouting-Hysterese für das Ad-Hoc-System und $H_C$ eine Rerouting-Hysterese für das zellulare UMTS/FDD-System für die Auswahl eines Kommunikationspfades darstellen, welche ein ständiges Springen zwischen mehreren annähernd gleichwertigen Kommunikationspfaden verhindern soll (Ping-Pong-Effekt). $C_R$ ist das Kommando für die Auswahl eines bestimmten Kommunikationspfades. $C_R$ wird in den Fällen der FIG 3 und 4 zu Anfang auf den Wert -1 gesetzt, um anzuzeigen, dass die entsprechende Kommunikationsverbindung ursprünglich innerhalb des Ad-Hoc-Systems verlief. Wenn nach Unterbrechung der Kommunikationsverbindung in dem Ad-Hoc-System und einer erneuten Berechnung von Gleichung (2) sich ergibt, dass nun $C_R$ den Wert +1 annimmt, dann wird die Kommunikationsverbindung über das zellulare UMTS/FDD-System weitergeführt.

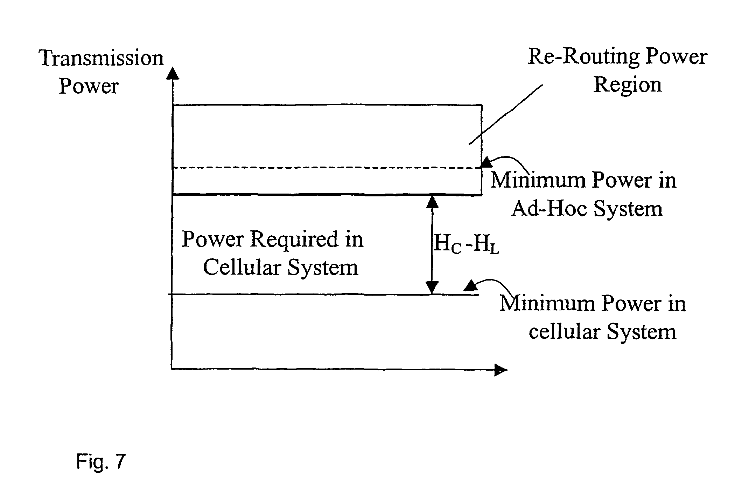

Um diesen Algorithmus zur Auswahl zwischen mehreren Funk-Kommunikationssystemen für die Einrichtung eines Kommunikationspfades zu verdeutlichen, zeigt FIG 7 den Zusammenhang zwischen den mindestens erforderlichen Sendeleistungen, die sich gemäß Gleichung (1) aus den Verbindungsgewinnen ergeben, und den beiden Werten für die Rerouting-Hysteresen. Insbesondere ist in FIG 7 diejenige Region für die Sendeleistung dargestellt, in der eine Einrichtung eines Kommunikationspfades in dem zellularen UMTS/FDD-System erfolgt. Die Voraussetzung, unter denen Gleichung (2) im Rahmen des erfindungsgemäßen Verfahrens angewendet wird, ist in FIG 8 verdeutlicht.

Um geeignete Werte H für die Rerouting-Hysteresen festlegen zu können, müssen die Parameter der Systemlast der jeweiligen Funk-Kommunikationssysteme berücksichtigt werden. Die Parameter der Systemlast beschreiben die aktuelle Last (z.B. in Bezug auf die Verkehrslast, die Interferenzsituation, die Sendeleistungen etc.) in dem Ad-Hoc-System bzw. in dem zellularen UMTS/FDD-System. Die Kenntnis der aktuellen Werte der Parameter der Systemlast gestattet es, die zu erwartende Systemlasten vorherzusagen, die durch mögliche alternative Kommunikationspfade entstehen, welche im Rahmen der Weiterführung einer Kommunikationsverbindung in Frage kommen können. Diese Berücksichtigung von Systemlasten erfolgt durch einen Zugangs-Algorithmus des jeweiligen Kommunikationssystems in jedem der Funk-Kommunikationssysteme bzw. in jeder möglicherweise in Frage kommenden lokalen Untereinheit eines Funk-Kommunikationssystems.

Sobald ein Kommunikationspfad in einem Funk-Kommunikationssystem oder einer entsprechenden Untereinheit zugelassen wurde, kann die unterbrochene Kommunikationsverbindung über diesen alternativen Kommunikationspfad weitergeführt werden. Dabei kann der Wert H für die entsprechende Hysterese aufgrund von Informationen, die dem Zugangs-Algorithmus zu Grunde liegen, angepasst werden. Die Werte H für die Rerouting-Hysteresen hängen von den Systemlasten in beiden Funk-Kommunikationssysteme ab: je höher die Systemlast in einem bestimmten Funk-Kommunikationssystem ist, desto niedriger ist der entsprechende Wert H für die entsprechende Rerouting-Hysterese. Damit kann leichter eine Änderung des Kommunikationspfades zur Weiterführung der Kommunikationsverbindung über einen alternativen Kommunikationspfad unter Einbeziehung eines alternatives Funk-Kommunikationssystems erfolgen.

Ein Entscheidungsdiagramm für einen bestimmten Kommunikationspfad zur Weiterführung einer Kommunikationsverbindung, der die bisher genannten Verfahrensschritte berücksichtigt, ist in FIG 8 dargestellt. Zunächst sei ausgehend von dem Teilnehmer-Endgerät MT1 eine Kommunikationsverbindung über das Ad-Hoc-System gegeben. Nach Ablauf einer Zeit $T_{RI}$ stellt das Teilnehmer-Endgerät MT1 fest, dass die Kommunikationsverbindung unterbrochen ist. Daraufhin sendet das Teilnehmer-Endgerät MT1 die Anfragen RACH und Paging-Signal an die beiden Funk-Kommunikationssysteme.

Das Teilnehmer-Endgerät berechnet dann die Antwortzeiten $T_{BL}$ des Ad-Hoc-Systems und $T_{BC}$ des zellularen UMTS/FDD-Systems. Dabei können die Antwortzeiten unterschiedlich lang festgelegt werden. So kann für $T_{BL}$ des Ad-Hoc-Systems insbesondere eine kürzere Dauer festgelegt werden als für $T_{BC}$ des zellularen Systems. Erfolgt keine rechzeitige Antwort der Funk-Kommunikationssysteme, so bleibt die Kommunikationsverbindung unterbrochen. Antwortet nur ein Funk-Kommunikationssystem innerhalb der vorgegebenen Zeit $T_{BL}$ bzw. $T_{BC}$, so kann die Kommunikationsverbindung über dieses Funk-Kommunikationssystem weitergeführt werden.

Antworten beide Funk-Kommunikationssysteme innerhalb der vorgegebenen Zeit $T_{BL}$ bzw. $T_{BC}$, so kann eine Auswahl des Kommunikationspfades durch Anwendung des Algorithmus nach Gleichung (2) erfolgen. Es werden also in diesem Fall zusätzlich zu den Antwortzeiten die Link Gain-Parameter berücksichtigt.

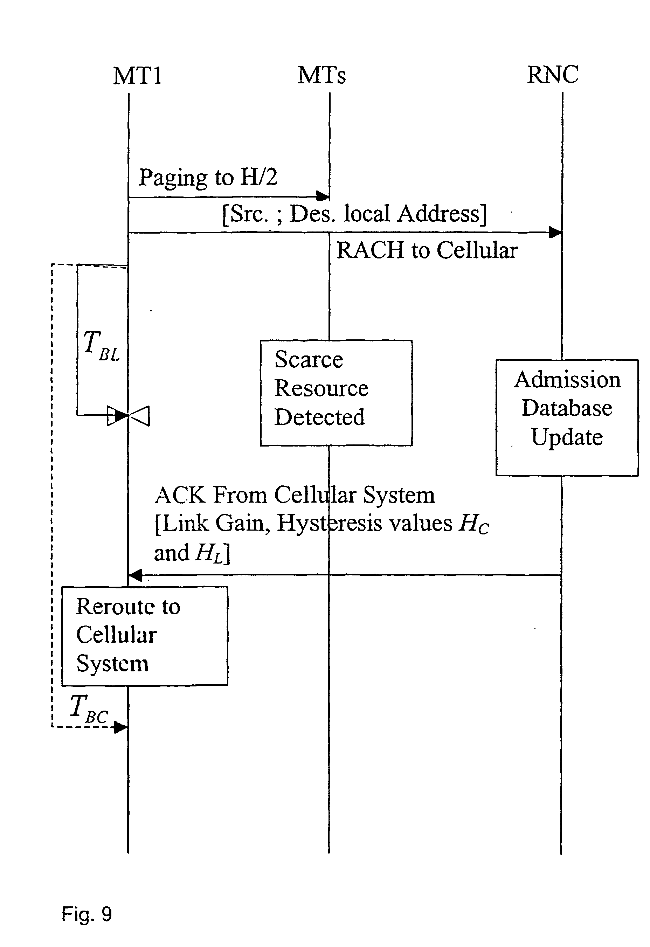

Ein Beispiel für einen Signalisierungsablauf für das Verfahren nach FIG 8 ist in FIG 9 dargestellt. Es wird vom Teilnehmer-Endgerät MT1 ein Paging-Signal an die anderen Teilnehmer-Endgeräte MT des Ad-Hoc Hyperlan/2 (H/2) -Systems gesendet, gleichzeitig wird an den Radio Network Controller RNC des zellularen UMTS/FDD-Systems eine RACH-Anfrage gesendet. In beiden Fällen werden die lokalen Adressdaten des Quellendgerätes MT1 (Source Src.) und des Zielendgerätes (Destination Des.) mit übertragen. Innerhalb der vorgegebenen Zeit $T_{BL}$ für das Ad-Hoc-System erfolgt keine Rückmeldung dieses Systems, es wird dort vielmehr z.B. eine Knappzeit von Ressourcen festgestellt. Dagegen wird in dem zellularen System die Datenbank des Zugangssystems aktualisiert und es erfolgt eine positive Rückmeldung (Acknowledgement ACK) innerhalb der für das zellulare System vorgegebenen Zeitdauer $T_{BC}$. Damit kann eine Weiterführung der Kommunikationsverbindung über das zellulare System erfolgen (Reroute to Cellular System).

Um die Weiterführung von Kommunikationsverbindungen unter Beteiligung des Ad-Hoc Funk-Kommunikationssystems möglichst zu vereinfachen, kann eine verbesserte Adressierung der Teilnehmer-Endgeräte vorgesehen werden, wie sie in FIG 5 dargestellt ist. Die Teilnehmer-Endgeräte MT1 bis MT4 besitzen jeweils individuelle Adressdaten in Form von Telefonnummern o.ä. innerhalb jedes der Funk-Kommunikationssysteme, also universelle Adressdaten (Universal Address) innerhalb des zellularen UMTS/FDD Funk-Kommunikationssystems und lokale Adressdaten (Local Address) innerhalb des Ac-Hoc Funk-Kommunikationssystems. Die lokalen Adressdaten können bevorzugt aus zwei Teilen bestehen, wie FIG 5 zeigt, nämlich einem ersten Teil (Prefix), der eine lokale Untereinheit des Funk-Kommunikationssystems identifiziert und der für alle Teilnehmer-Endgeräte innerhalb dieser Untereinheit identisch ist, und einem zweiten Teil, der das jeweilige Teilnehmer-Endgerät innerhalb dieser Untereinheit identifiziert. Innerhalb der Untereinheit genügt es dann, die Teilnehmer-Endgeräte lediglich über den zweiten Teil der Adressdaten zu adressieren.

Das Ad-Hoc Funk-Kommunikationssystem wird von einer zentralen Kontrollinstanz (Central Controller CC) verwaltet. Die Festlegung dieser Kontrollinstanz erfolgt über einen geeigneten Algorithmus, der ein bestimmtes Teilnehmer-Endgerät als Kontrollinstanz auswählt, um das Datenübertragungsverhalten der Teilnehmer-Endgeräte, die sich in der Nachbarschaft dieses als Kontrollinstanz ausgewählten Teilnehmer-Endgerätes befinden, zu koordinieren. Entsprechend der vorgenannten zweiteiligen Adressierung der Teilnehmer-Endgeräte ist der erste Teil (Prefix) jeweils eindeutig für eine bestimmte Kontrollinstanz des Ad-Hoc Funk-Kommunikationssystems.

Jedes Teilnehmer-Endgerät behält seine lokalen Adressdaten, so lange es aktiv ist, d.h. so lange es einer bestimmten Kontrollinstanz CC zugeordnet ist. Die Teilnehmer-Endgeräte benutzen die lokalen Adressdaten, um sich innerhalb des Ad-Hoc-Systems zu identifizieren und um Kommunikationsverbindungen zu anderen Teilnehmer-Endgeräten des Ad-Hoc-Systems aufzubauen. Die Vergabe von lokalen Adressdaten, insbesondere eine Vergabe auf begrenzte Zeit, können eine weitgehende Anonymität der Teilnehmer-Endgeräte innerhalb des Ad-Hoc-Systems garantieren, wo dies sinnvoll ist. Es wird bei der Vergabe der lokalen Adressdaten darauf geachtet, dass genügend Adressierungsmöglichkeiten für eventuell zusätzlich hinzukommende Teilnehmer-Endgeräte verbleiben.

Diese Kontrollinstanz kann auch alternativ zur Verfügung stehenden Funk-Kommunikationssystemen wie zellulare Funk-Kommunikationssystemen die Adressdaten, insbesondere die lokalen Adressdaten, derjenigen Teilnehmer-Endgeräte übermitteln, die von der Kontrollinstanz koordiniert werden. Im vorliegenden Fall können diese an einen zentralen Adressdatenspeicher oder eine entsprechende zentrale Datenverwaltungseinheit (z.B. ein VLR) wie eine Vermittlungseinrichtung (z.B. ein MSC) übertragen werden.

Anschließend können gesteuert durch bestimmte Ereignisse die an das zellulare UMTS/FDD Funk-Kommunikationssystem übertragene Adressdaten aktualisiert werden: Wenn Teilnehmer-Endgeräte innerhalb des Ad-Hoc-Systems neu hinzukommen, werden die lokalen Adressdaten durch die Kontrollinstanz an die entsprechende Einrichtung (z.B. MSC) des UMTS/FDD-Systems übertragen. Tritt ein Verlust der Verbindung zwischen Kontrollinstanz und einem oder mehreren Teilnehmer-Endgeräte auf, so dass einzelne oder mehrere Teilnehmer-Endgeräte nicht mehr aktiv dieser Kontrollinstanz zugeordnet sind, so werden diesen Teilnehmer-Endgeräten neue lokale Adressdaten durch eine neue Kontrollinstanz zugewiesen und es werden diese neuen lokalen Adressdaten entsprechend an das zellulare Funk-Kommunikationssystem übermittelt. In solchen Fällen würde also die Aktualisierung der im zellularen Funk-Kommunikationssystem gespeicherten lokalen Adressdaten nicht regelmäßig, sondern auf zufälliger Basis erfolgen, da die entscheidenden Ereignisse ebenfalls nach keinem zeitlich regelmäßigen Muster eintreten.

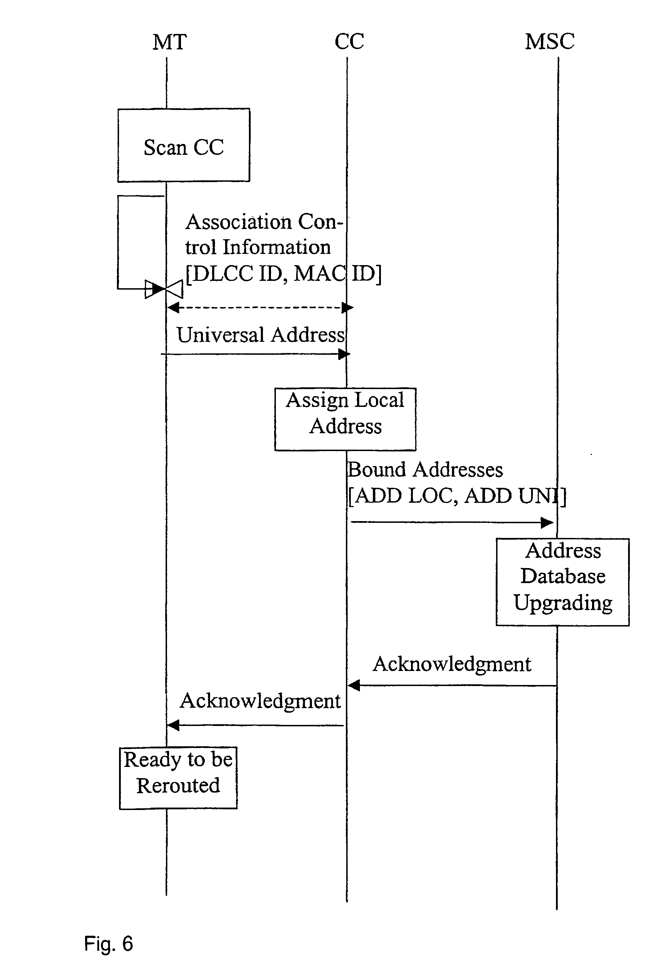

FIG 6 zeigt den Signalisierungsablauf einer solchen Übermittlung lokaler Adressdaten zwischen Teilnehmer-Endgerät MT, Kontrollinstanz CC des Ad-Hoc-Systems und Vermittlungseinrichtung MSC des UMTS/FDD-Systems. Es werden nach einer Ermittlung der zugehörigen Kontrollinstanz CC zunächst die universellen Adressdaten durch das Teilnehmer-Endgerät MT an die Kontrollinstanz CC übertragen. Diese weist dem Teilnehmer-Endgerät MT lokale Adressdaten ADD LOC zu und übermittelt diese zusammen mit den universellen Adressdaten ADD UNI an die Vermittlungseinrichtung MSC. Die universellen Adressdaten werden übermittelt, um in der Vermittlungseinrichtung MSC eine eindeutige Zuordnung und Aktualisierung der Adressdaten zu erlauben. Die Übermittlung der universellen Adressdaten an die Kontrollinstanz kann aus Datenschutzgründen auch verschlüsselt erfolgen.

In der Vermittlungseinrichtung MSC erfolgt eine Aktualisierung der gespeicherten Daten. Dieser Vorgang wird an die Kontrollinstanz CC zurückbestätigt (Acknowledgement), die wiederum eine Bestätigung an das Teilnehmer-Endgerät MT sendet. Damit sind die Voraussetzungen für eine Weiterführung (Rerouting) einer innerhalb des Ad-Hoc-Systems für das Teilnehmer-Endgerät MT bestehenden Kommunikationsverbindung unter Einbeziehung des UMTS/FDD-Systems geschaffen. Die gesamten Adressdaten können auch von dem UMTS/FDD-System an das Teilnehmer-Endgerät zurückübertragen werden, um dort eine Sicherungskopie der Adressdaten zu erstellen, z.B. für den Fall, dass die Kontrollinstanz CC die Verbindung zu dem UMTS/FDD-System verliert. Dann kann auf die Sicherungskopie der Adressdaten in dem Teilnehmer-Endgerät zurückgegriffen werden, um eine Weiterführung (Rerouting) von bestehenden Kommunikationsverbindungen zu ermöglichen.

Für einen effektiven Zugriff auf die gespeicherten Adressdaten innerhalb des zellularen Funk-Kommunikationssystems werden also Adresstabellen mit den Adressdaten der Teilnehmer-Endgeräte angelegt, wie sie in FIG 5 dargestellt sind. In einer solchen Adresstabelle werden die lokalen und die universellen Adressdaten der Teilnehmer-Endgeräte zueinander in Relation gesetzt. Solche Adresstabellen können innerhalb des zellularen Funk-Kommunikationssystems auf Grund der Kenntnis der übermittelten lokalen Adressdaten und auf Grund der ohnehin vorliegenden universellen Adressdaten erzeugt werden. Diese Adresstabellen können beispielsweise durch eine Vermittlungseinrichtung des zellularen Funk-Kommunikationssystems (MSC) in einer zugeordneten Datenverwaltungseinheit (VLR) gespeichert werden. Soll nun eine Weiterführung einer in dem Ad-Hoc-System bestehenden Kommunikationsverbindung unter Einbeziehung des UMTS/FDD-Systems erfolgen, wie beispielhaft in den FIG 3 und 4 dargestellt, so wird die Einrichtung eines alternativen Kommunikationspfades über das UMTS/FDD-System durch die bereits vorliegende Adresstabelle erleichtert.

Wenn nun für ein Teilnehmer-Endgerät MT eine bestehende Kommunikationsverbindung in dem Ad-Hoc-System unterbrochen wird (im Fall der FIG 3 und 4 die Verbindung zwischen Teilnehmer-Endgeräten MT1 und dem Ziel-Teilnehmer-Endgerät MT3)), so wird eine Anfrage an das UMTS/FDD-System gesendet, wie bereits beschrieben, und es werden dabei die lokalen Adressdaten des betroffenen Teilnehmer-Endgerätes MT1 und des Ziel-Teilnehmer-Endgerätes MT3 mit übertragen. Die Vermittlungseinrichtung MSC des UMTS/FDD-Systems kann dann die universellen Adressdaten der betroffenen Teilnehmer-Endgeräte MT1, MT3 aus der gespeicherten Adresstabelle auslesen und auf deren Basis die Weiterführung (Rerouting) der Kommunikationsverbindung einleiten. Wenn ein alternativer Kommunikationspfad über das UMTS/FDD-System eingerichtet werden kann, wird eine Bestätigung (Acknowledgement) an das betroffene Teilnehmer-Endgerät MT1 zusammen mit spezifischen Parametern über die mögliche Kommunikationsverbindung wie Link Gain-Parametern und Hysteresis-Parametern übermittelt.

Die vorliegende Erfindung stellt also insbesondere Algorithmen und Bearbeitungsprozeduren für unterbrochene oder gestörte Kommunikationsverbindungen in Funk-Kommunikationssystemen wie in Ad-Hoc-Systemen bereit. Die Weiterführung der Kommunikationsverbindung über einen alternativen Kommunikationspfad kann dann an jeder geeigneten Stelle des bisherigen Kommunikationspfades erfolgen. Es kann also der Kommunikationspfad insbesondere das Ad-Hoc-System an jeder weitgehend beliebigen Stelle verlassen und an einer anderen, ebenfalls weitgehend beliebigen Stelle wieder in das Ad-Hoc-System eintreten.

Weiterhin kann eine Adressdatenbank in demjenigen Funk-Kommunikationssystem vorgesehen werden, das einen größeren Flächenbereich abdeckt, wie insbesondere in einem VLR eines zellularen Systems, wobei die Datenbank je nach dem Adress-Schema der Teilnehmer-Endgeräte des Ad-Hoc-Systems aktualisiert werden kann und eine Zuordnung von Adressdaten und ein Adressmanagement vorgesehen werden kann. Durch eine Einführung von Adressdaten insbesondere für das Ad-Hoc-System, die sich aus einem Prefix zur Identifikation einer Untereinheit des Ad-Hoc-Systems und Adressdaten für eine Identifikation der Teilnehmer-Endgeräte MT zusammensetzen, kann die Einrichtung von alternativen Kommunikationspfaden (Rerouting) erleichtert werden. Durch die Einführung von definierten Zeitdauern und Hysterese-Werten oder ähnlichen Parametern kann eine weitere Auswahl zwischen mehreren alternativen Kommunikationspfaden erfolgen und es kann dieser Kommunikationspfad stabilisiert werden, also ein zu häufiges Wechseln des Kommunikationspfades (Ping-Pong-Effekt) verhindert werden.

**Patentansprüche**

1. Verfahren zur Weiterführung einer bestehenden Kommunikationsverbindung mit einem Teilnehmer-Endgerät, welches Einrichtungen zur Kommunikation mit mehreren Funk-Kommunikationssystemen aufweist, bei dem
in einer Umgebung mit mehreren Funk-Kommunikationssystemen nach einer Störung oder Unterbrechung der bestehenden Kommunikationsverbindung zu einem ersten Funk-Kommunikationssystem eine Weiterführung der Kommunikationsverbindung unter Einbeziehung mindestens eines weiteren Funk-Kommunikationssystems angeregt wird,
**dadurch gekennzeichnet,**
**dass** dem Teilnehmer-Endgerät vor der Weiterführung der Kommunikationsverbindung innerhalb des weiteren Funk-Kommunikationssystems Adressdaten zugeteilt werden, wobei die dem Teilnehmer-Endgerät jeweils zugeteilten Adressdaten in den verschiedenen Funk-Kommunikationssystemen in zumindest einer Adresstabelle einander zugeordnet werden.

2. Verfahren nach Anspruch 1,
**dadurch gekennzeichnet,**
**dass** nach einer Störung oder Unterbrechung der bestehenden Kommunikationsverbindung Anfragen zur Weiterführung der Kommunikationsverbindung parallel über ein erstes Funk-Kommunikationssystem und mindestens ein weiteres Funk-Kommunikationssystem erfolgen.

3. Verfahren nach Anspruch 2,
**dadurch gekennzeichnet,**
**dass** eine Entscheidung über die Weiterführung der Kommunikationsverbindung unter Einbeziehung mindestens eines weiteren Funk-Kommunikationssystems gesteuert durch Zeitinformationen erfolgt.

4. Verfahren nach Anspruch 3,
**dadurch gekennzeichnet,**
**dass** die Entscheidung über die Weiterführung der Kommunikationsverbindung abhängig von der Zeitdauer bis zu einer Antwort der Funk-Kommunikationssysteme auf die Anfragen erfolgt.

5. Verfahren nach einem der Ansprüche 2 bis 4,
**dadurch gekennzeichnet,**
**dass** die Entscheidung über die Weiterführung der Kommunikationsverbindung alternativ oder zusätzlich abhängig von einem Vergleich von Verbindungsparametern für die Kommunikationsverbindung erfolgt.

6. Verfahren nach Anspruch 5,
**dadurch gekennzeichnet,**
**dass** bei Vorliegen von Antworten mehrerer Funk-Kommunikationssysteme innerhalb von definierten Zeitdauern eine Entscheidung über die Weiterführung der Kommunikationsverbindung abhängig von Sendeleistungsdaten für die Kommunikationsverbindung erfolgt.

**7.** Verfahren nach Anspruch 1,
**dadurch gekennzeichnet,**
**dass** zur Erzeugung der Adresstabellen regelmäßig und/oder ereignisgesteuert die Adressdaten der Teilnehmer-Endgeräte zwischen Adressspeichern der Funk-Kommunikationssysteme ausgetauscht werden.

**8.** Verfahren nach Anspruch 1 oder 7,
**dadurch gekennzeichnet,**
**dass** die Adressdaten der Teilnehmer-Endgeräte in zumindest einem der Funk-Kommunikationssysteme durch eine Kombination aus Adressdaten zur Identifizierung einer lokalen Untereinheit des Funk-Kommunikationssystems und weiteren Adressdaten zur Identifizierung des Teilnehmer-Endgerätes innerhalb der lokalen Untereinheit des Funk-Kommunikationssystems gebildet werden.

**9.** Verfahren nach einem der Ansprüche 1 bis 8,
**dadurch gekennzeichnet,**
**dass** die Weiterführung der Kommunikationsverbindung über Einrichtungen eines Funk-Kommunikationssystems erfolgt.

**10.** Verfahren nach einem der Ansprüche 1 bis 8,
**dadurch gekennzeichnet,**
**dass** die Weiterführung der Kommunikationsverbindung über Einrichtungen mehrerer Funk-Kommunikationssysteme erfolgt.

**11.** Verfahren nach einem der Ansprüche 1 bis 10,
**dadurch gekennzeichnet,**
**dass** als Kommunikationssysteme mindestens ein Ad-Hoc-Funk-Kommunikationssystem und mindestens ein zellulares Funk-Kommunikationssystem verwendet werden.

**Claims**

**1.** Method for rerouting an existing communication link with a subscriber terminal that has devices for communication with several radio communication systems
whereby,
in an environment with several radio communication systems a rerouting of the communication link involving at least one further radio communication system is initiated after a disruption or interruption of the existing communication link to a first radio communication system,
**characterised in that**
the subscriber terminal is assigned address data before the rerouting of the communication link within the further radio communication system, whereby the address data assigned to the subscriber terminal in each instance in the various radio communication systems is assigned to at least one address table.

**2.** Method in accordance with Claim 1,
**characterised in that**,
after a disruption or interruption of the existing communication link, the requests for rerouting of the communication link are made in parallel via a first radio communication system and at least one further radio communication system.

**3.** Method in accordance with Claim 2,
**characterised in that**,
a decision regarding the rerouting of the communication link using at least one further radio communication system is made controlled by time information.

**4.** Method in accordance with Claim 3,
**characterised in that**,
the decision regarding the rerouting of the communication link is taken depending on the time duration until a response to the requests is obtained from the radio communication systems.

**5.** Method in accordance with one of Claims 2 to 4,
**characterised in that**,
the decision regarding the rerouting of the communication link is made as an alternative, or additionally, depending on a comparison of connection parameters for the communication link.

**6.** Method in accordance with Claim 5,
**characterised in that**,
when a response is obtained from several radio communication systems within a defined time period a decision is made regarding the rerouting of the communication link, depending on the transmission power data for the communication link.

**7.** Method in accordance with Claim 1
**characterised in that**,
to generate address tables, the address data of the subscriber terminals is exchanged between address memories of the radio communication system regularly and/or controlled according to events.

**8.** Method in accordance with Claims 1 or 7,
**characterised in that**,
the address data of the subscriber terminals in at least one of the radio communication systems is formed by a combination of address data for identification of a local subunit of the radio communication system and other address data for identification of the subscriber terminal within the local subunit of the radio communication system.

**9.** Method in accordance with Claim 1 or 8,
**characterised in that**,
the rerouting of the communication link takes place via devices of one radio communication system.

**10.** Method in accordance with one of Claims 1 to 8,
**characterised in that**,
the rerouting of the communication link takes place via devices of several radio communication systems.

**11.** Method in accordance with one of Claims 1 to 10,
**characterised in that**,
at least one ad-hoc radio communication system and at least one cellular radio communication system are used as communication systems.

**Revendications**

**1.** Procédé pour réacheminer une connexion de communication existante avec un terminal d'abonné qui comporte des dispositifs pour la communication avec plusieurs systèmes de radiocommunication, dans lequel, dans un environnement comprenant plusieurs systèmes de radiocommunication, après une perturbation ou une interruption de la connexion de communication existante vers un premier système de radiocommunication, un réacheminement de la connexion de communication est engendré au moyen d'au moins un système de radiocommunication additionnel,
**caractérisé en ce**
**que** des données d'adresses sont affectées au terminal d'abonné avant le réacheminement de la connexion de communication à l'intérieur du système de radiocommunication additionnel, les données d'adresses, respectivement attribuées au terminal d'abonné dans les systèmes de radiocommunication différents, étant affectées l'une à l'autre dans au moins une table d'adresses.

**2.** Procédé selon la revendication 1,
**caractérisé en ce**
**qu'**ont lieu, après une perturbation ou une interruption de la connexion de communication existante, des requêtes de réacheminement de la connexion de communication parallèlement par l'intermédiaire d'un premier système de radiocommunication et d'au moins un système de radiocommunication additionnel.

**3.** Procédé selon la revendication 2,
**caractérisé en ce**

qu'une décision concernant le réacheminement de la connexion de communication a lieu au moyen d'au moins un système de radiocommunication additionnel, commandée par des informations temporelles.

4. Procédé selon la revendication 3,
**caractérisé en ce**
**que** la décision concernant le réacheminement de la connexion de communication a lieu en fonction de la durée de temps jusqu'à une réponse des systèmes de radiocommunication aux requêtes.

5. Procédé selon l'une des revendications 2 à 4,
**caractérisé en ce**
**que** la décision concernant le réacheminement de la connexion de communication a lieu, alternativement ou additionnellement, en fonction d'une comparaison de paramètres de connexion pour la connexion de communication.

6. Procédé selon la revendication 5,
**caractérisé en ce**
**que**, en présence de réponses de plusieurs systèmes de radiocommunication à l'intérieur de durées de temps définies, une décision concernant le réacheminement de la connexion de communication a lieu en fonction de données de puissance d'émission pour la connexion de communication.

7. Procédé selon la revendication 1,
**caractérisé en ce**
**que**, pour créer les tables d'adresses, les données d'adresses des terminaux d'abonnés sont échangées régulièrement et/ou par commande par événements entre des mémoires d'adresses des systèmes de radiocommunication.

8. Procédé selon la revendication 1 ou 7,
**caractérisé en ce**
**que** les données d'adresses des terminaux d'abonnés dans au moins l'un des systèmes de radiocommunication sont constituées par une combinaison de données d'adresses pour identifier une sous-unité locale du système de radiocommunication et de données d'adresses additionnelles pour identifier le terminal d'abonné à l'intérieur de la sous-unité locale du système de radiocommunication.

9. Procédé selon l'une des revendications 1 à 8,
**caractérisé en ce**
**que** le réacheminement de la connexion de communication se fait par l'intermédiaire de dispositifs d'un système de radiocommunication.

10. Procédé selon l'une des revendications 1 à 8,
**caractérisé en ce**
**que** le réacheminement de la connexion de communication se fait par l'intermédiaire de dispositifs de plusieurs systèmes de radiocommunication.

11. Procédé selon l'une des revendications 1 à 10,
**caractérisé en ce**
**que** sont utilisés, en tant que systèmes de communication, au moins un système de radiocommunication ad hoc et au moins un système cellulaire de radiocommunication.

Fig. 1

Fig. 2

Fig. 3

Fig. 4

| $MT_i$ | 0172-6876543 | 3456-34 |
|--------|--------------|---------|
| $MT_{i+1}$ | 0172-7863932 | 3456-20 |
| $MT_{i+2}$ | 0172-4334234 | 3456-11 |

Universal Address                    Local Address

Fig. 5

Fig. 6

Fig. 7

Fig. 8

Fig. 9